# EUROPÄISCHE PATENTSCHRIFT

(11) **EP 4 249 686 B1**
(45) Veröffentlichungstag und Bekanntmachung des Hinweises auf die Patenterteilung: **25.06.2025**
(21) Anmeldenummer: 22163681.4
(22) Anmeldetag: 22.03.2022
(51) Int. Cl.: E02D 5/80, G01L 1/22

(54) **MESSMUFFE UND VERFAHREN ZUM MESSEN EINER KRAFT IN EINEM ANKERPFAHL**
MEASURING SLEEVE AND METHOD FOR MEASURING FORCE IN AN ANCHOR PILE
DOUILLE DE MESURE ET PROCÉDÉ DE MESURE D'UNE FORCE DANS UNE BÉQUILLE DE TRAVAIL

(43) Veröffentlichungstag der Anmeldung: 27.09.2023
(73) Patentinhaber: BAUER Spezialtiefbau GmbH, 86529 Schrobenhausen (DE)
(72) Erfinder: Simon, Andreas, 85055 Ingolstadt (DE); Rail, Manfred, 86529 Schrobenhausen OT Hörzhausen (DE)
(74) Vertreter: Wunderlich & Heim Patentanwälte PartG mbB

(56) Entgegenhaltungen:
- WO-A1-2011/012406
- DE-A1- 3 636 322
- DE-C1- 4 127 249
- FR-A5- 2 100 153

## Beschreibung

Die Erfindung betrifft eine Messmuffe zum Messen einer Kraft in einem Ankerpfahl nach dem Anspruch 1 sowie ein Verfahren zum Messen einer Kraft in einem Ankerpfahl nach dem Anspruch 10.

Ankerpfähle, welche aus mehreren Ankerstäbe gebildet sind, werden insbesondere im Spezialtiefbau für verschiedenste Zwecke eingesetzt. So werden Ankerpfähle etwa als Zuganker für eine Rückverankerung von Baugrubenumschließungen und Bodenplatten verwendet. Auch können Ankerpfähle zur Auftriebssicherung etwa für Bauwerkselemente unter Wasser vorgesehen werden. Auch ein Einsatz als Mikropfahl zur Aufnahme von Bauwerkslasten ist grundsätzlich bekannt.

Die zum Herstellen eines Ankerpfahles verwendeten Ankerstäbe weisen in der Regel eine Länge zwischen 5 m bis 15 m auf, wobei die Länge normalerweise aufgrund von Transportbeschränkungen bedingt ist. Zum Bilden längerer Ankerpfähle werden diese gewöhnlich mit einer Verbindungsmuffe durch Schrauben zusammengesetzt und nach Einbringen in den Boden durch Einleiten einer Zementsuspension im umliegenden Boden verankert.

Übliche Ankerstäbe zum Bilden eines Ankerpfahls sind beispielsweise aus der DE 18 13 627 B2 bekannt. Fertigungstechnisch bedingt weisen die Ankerstäbe kein durchgehendes eingeschnittenes Außengewinde auf. Vielmehr ist das Außengewinde durch einzelne Gewinderippen gebildet, welche voneinander getrennt sind, so dass ein unterbrochenes Gewinde gebildet ist.

Aus der DE 36 36 322 ist eine Messmuffe zur Messung der Belastung von Seilzugankern bekannt. Die Sensoren sind in vier Längsnuten auf der Außenseite der Messmuffe eingebracht. Die Signalübertragung erfolgt über einen hohlen Gewindeanker. Der Messkörper mit seinen Längsnuten ist für die Erfassung von Kräften in Ankerstäben mit unterbrochenen Gewinderippen ungeeignet.

Bei Ankerpfählen besteht das Bedürfnis, deren Belastung zu erfassen, etwa um eine entsprechende Absicherung des Bauwerkes durch die erstellten Ankerpfähle verifizieren zu können.

Es ist bekannt, zum Erfassen von Kräften an den Ankerpfählen Sensoren anzubringen, mit welchen die Kräfte ermittelt werden können, die von einem Ankerpfahl tatsächlich aufgenommen wird. Diese Sensoren können an den Ankerstäben selbst angebracht sein. Allerdings ist eine Handhabung der langen Ankerstäbe nach der Befestigung der Sensoren kritisch, da die empfindlichen Sensoren leicht beschädigt werden können.

Bei Verwendung der üblichen Ankerstäbe führt ein Anbringen von Sensoren an den Verbindungsmuffen zu unsicheren und stark abweichenden Messergebnissen. Die Verbindungsmuffen sind mit einem durchgehenden Innengewinde versehen, welches sich über die gesamte axiale Länge erstreckt. Beim Einschrauben der Gewindeabschnitte der Ankerstäbe, welche mit nicht-durchgehenden Gewinderippen ausgebildet sind, erfolgt eine ungleichmäßige Krafteinleitung und Belastung über den Querschnitt der Gewindemuffe. Die Messergebnisse eines an der Verbindungsmuffe angeordneten Sensors können abhängig von einer Einschraublage der Gewinderippen und damit einer Relativposition zum Sensor stark abweichen. Es ergeben sich bei gleicher Belastung unterschiedliche Messwerte abhängig davon, ob der Sensor in einem Bereich liegt, bei welchem die Teilgewinderippen des Ankerstabes in das Gewinde der Muffe eingreifen, oder in einem Bereich, in dem die Gewindeabschnitte in der Verbindungsmuffe freiliegen.

Der Erfindung liegt die **Aufgabe** zugrunde, eine Vorrichtung und ein Verfahren zum Messen einer Kraft in einem Ankerpfahl zu schaffen, mit welchen in einfacher und zuverlässiger Weise eine Kraft in einem Ankerpfahl erfasst werden kann.

Die Aufgabe wird zum einen durch eine Messmuffe mit den Merkmalen des Anspruchs 1 und zum anderen durch ein Verfahren mit den Merkmalen des Anspruchs 11 gelöst. Bevorzugte Ausführungsformen der Erfindung sind in den abhängigen Ansprüchen angegeben.

Nach der Erfindung ist eine Messmuffe zum Messen einer Kraft in einem Ankerpfahl vorgesehen, welcher mindestens zwei Ankerstäbe aufweist, wobei die Messmuffe einen hülsenförmigen Grundkörper mit einem Aufnahmeloch umfasst, wobei sich von einer Seite ein erstes Innengewinde und von einer zweiten Seite ein zweites Innengewinde in den Grundkörper erstreckt, die Innengewinde jeweils zum Einschrauben eines Gewindeabschnitts eines Ankerstabes ausgebildet sind, zwischen dem ersten Innengewinde und dem zweiten Innengewinde ein ringförmiger Mittenabschnitt ausgebildet ist, welcher frei von einem Gewinde ist, und an dem Mittenabschnitt mindestens ein Kraftmesselement angeordnet ist, welches axial beabstandet von den Innengewinden ist.

Eine Grundidee der Erfindung liegt darin, eine spezielle Messmuffe vorzusehen, welche von herkömmlichen Verbindungsmuffen mit einem durchgehenden Innengewinde abweicht. Dabei wird an der Messmuffe ein ringförmiger Mittenabschnitt vorgesehen, an welchem weder an der Außenseite noch an der Innenseite ein Gewinde eingeschnitten oder eingeformt ist. Dieser Mittenabschnitt ist als ein Aufnahmebereich zum Aufnehmen mindestens eines Kraftmesselementes ausgebildet. Das mindestens eine Kraftmesselement ist in diesem von einem Gewinde freigehaltenen Mittenabschnitt angebracht.

Die Erfindung beruht dabei auf der Erkenntnis, dass die stark abweichenden Messergebnisse beim Anbringen eines Kraftmesselementes an einer herkömmlichen Verbindungsmuffe mit einem durchgehenden Innengewinde maßgeblich durch einen unsymmetrischen Gewindeeingriff zwischen den Teilgewinderippen, welche ein Außengewinde an den Ankerstäben bilden, und dem Innengewinde der Muffe zurückzuführen sind. Hierdurch wird eine über den Umfang ungleichmäßige Krafteinleitung und damit eine ungleichmäßige Belastung in dem Gewinde-Verbindungsbereich der Muffe erzeugt. Durch das Vorsehen eines Mittenabschnitts zwischen zwei seitlichen Innengewinden und die Anordnung des mindestens einen Kraftelementes in diesem Mittenabschnitt wird sichergestellt, dass das Kraftmesselement nicht in einem Muffenbereich mit ungleichmäßiger Krafteinleitung angeordnet ist.

Durch die Beabstandung des Mittenabschnittes von den einzelnen Gewindebereichen an der Muffe wird erreicht, dass sich Spannungen oder ein Kraftfluss innerhalb der Muffe in dem Mittenabschnitt ausgleichen können, so dass unabhängig von einer Drehposition eines eingeschraubten Ankerstabes in dem Mittenabschnitt ein zuverlässiger und gleichmäßiger Messwert von dem mindestens einen Kraftmesselement erfasst werden kann.

Grundsätzlich können die Innengewinde unterschiedlich ausgebildet und entsprechend den vorgesehenen einzuschraubenden Ankerstäben realisiert sein. Bevorzugt ist es nach einer Ausführungsform der Erfindung, dass die zwei Innengewinde gleich ausgebildet sind. Die Innengewinde können dabei die gleiche Gewinderichtung, die gleiche Gewindesteigung, die gleiche Gewindeart und/oder den gleichen Innendurchmesser aufweisen.

Das Kraftmesselement kann grundsätzlich an jeder geeigneten Stelle an dem Mittenabschnitt angebracht sein. Besonders zweckmäßig ist es nach einer Ausführungsvariante der Erfindung, dass das mindestens eine Kraftmesselement an dem Mittenabschnitt an einer Außenseite des Grundkörpers angebracht ist. Hierdurch ist es möglich, das Kraftmesselement insbesondere sehr einfach mit einer Daten- und/oder Energieleitung zu versehen. Vorzugsweise

ist das Aufnahmeloch als ein Durchgangsloch gebildet, welches sich über die gesamte axiale Länge des Grundkörpers erstreckt. Eine weitere vorteilhafte Ausführungsform der Erfindung besteht darin, dass in dem Aufnahmelochloch der Mittenabschnitt radial nach innen vorspringt und gegenüber dem Innengewinde radial vorsteht oder radial nach außen rückspringt und eine ringförmige Nut bildet. Hierdurch wird eine klare Beabstandung der beiden seitlichen Innengewinde zueinander erreicht. Bei einem Vorspringen radial nach innen kann der Mittenabschnitt auch als ein Axialanschlag beim Eindrehen der Gewindeabschnitte der Ankerstäbe dienen. Der Grundkörper der hülsenförmigen Messmuffe weist vorzugsweise eine zylindrische Außenkontur auf. Der Mittenabschnitt kann auch massiv ausgebildet sein, wobei das Aufnahmeloch durch zwei getrennte Sacklochbereiche gebildet ist.

Zum Erreichen von gleichmäßigen oder wiederholbaren Messwerten ist es nach der Erfindung vorgesehen, dass der Mittenabschnitt an seiner Außenseite und seiner Innenseite glattflächig mit einer gleichen Wandstärke ausge
bildet ist. In einem derartig gleichmäßig ausgebildeten, insbesondere ringförmigen Mittenabschnitt können sich Spannungen, die durch eine über den Umfang ungleichmäßige Krafteinleitung von den Ankerstäben in den axial angrenzenden Gewindeabschnitten der Muffe bewirkt werden, ausgleichen. In dem Mittenabschnitt kann sich so eine weitgehend gleichmäßige elastische und/oder plastische Verformung des Mittenabschnitts ausbilden. Diese über den Umfang des Mittenabschnitts weitgehend gleichmäßigen Veränderungen können somit unabhängig von einer Drehposition oder relativen Drehlage des Kraftmesselementes zu den Gewinderippen der Ankerabschnitte zuverlässig und mit guter Wiederholgenauigkeit erfasst werden.

Als Kraftmesselement können grundsätzlich alle geeigneten Sensoren verwendet werden. Besonders vorteilhaft und effizient ist es nach einer Ausführungsform der Erfindung, dass als Kraftmesselement mindestens ein Dehnungsmessstreifen vorgesehen ist. Ein Dehnungsmessstreifen kann fest an den Mittenabschnitt angebracht, insbesondere aufgeklebt, werden. Dehnungen des Mittenabschnittes bedingt durch eine Kraftbeaufschlagung an dem Mittenabschnitt beziehungsweise der Messmuffe können durch den Dehnungsmessstreifen erfasst und in ein elektrisches Signal übersetzt werden. Das elektrische Signal kann gegebenenfalls verstärkt zu einer Auswerteeinrichtung weitergeleitet werden. Dies kann leitungsgebunden oder drahtlos erfolgen.

Die Erfindung umfasst weiterhin einen Ankerpfahl mit mindestens zwei Ankerstäben, welche an zumindest einem Ende einen Gewindeabschnitt aufweisen, wobei die Gewindeabschnitte in einer erfindungsgemäßen Messmuffe eingeschraubt sind und die Ankerstäbe durch die Messmuffe miteinander verbunden sind. Vorzugsweise können die Ankerstäbe an ihren beiden freien Enden mit Gewindeabschnitten oder insgesamt über ihre Länge mit einem Gewinde ausgebildet sein. Weiterhin kann der Ankerpfahl auch aus mehr als zwei Ankerstäben aufgebaut sein, wobei zwischen jeweils zwei aneinandergrenzenden Ankerstäben eine Verbindungsmuffe angeordnet ist. Dabei können eine oder mehrere Muffen als erfindungsgemäße Messmuffen ausgebildet sein.

Der Ankerpfahl mit den mindestens zwei miteinander verbundenen Ankerstäben kann in einem Bohrloch zur Herstellung eines Bohr- oder Verankerpfahles eingebracht werden. Ausgehend von dem mindestens einen Kraftmesselement kann sich entlang einer Außenseite des so gebildeten Ankerpfahles eine Messleitung erstrecken. Die Messleitung kann zur Leitung von Daten und vorzugweise auch von elektrischem Strom ausgebildet sein.

Gemäß einer weiteren Ausführungsform der Erfindung ist es vorgesehen, dass mindestens ein Gewindeabschnitt eines Ankerstabes mit Gewinderippen ausgebildet ist, welche ein unterbrochenes Gewinde bilden. Der Ankerstab mit dem Gewinde kann so in besonders effizienter Weise hergestellt werden, etwa durch Warmwalzen und/oder Kaltwalzen. Derartige Ankerstäbe sind marktüblich und können kostengünstig bezogen werden. Trotz der Ausbildung der Gewindeabschnitte mit einzelnen Gewinderippen und damit ohne Ausbildung eines durchgehenden Außengewindes können in Verbindung mit der erfindungsgemäßen Messmuffe zuverlässige Messwerte über die tatsächliche Kraftaufnahme eines Ankerpfahles erreicht werden. Dies ist für eine zuverlässig Prüfung und Sicherstellung einer korrekten Verankerung, etwa eines Bauwerkes im Boden oder einem Gewässergrund, vorteilhaft.

Der aus den mindestens zwei Ankerstäben und der Verbindungsmuffe gebildete Ankerpfahl kann vielfältig eingesetzt werden. Besonders zweckmäßig ist es nach einer Weiterbildung der Erfindung, dass der Ankerpfahl als ein Mikropfahl, ein Zuganker oder ein Auftriebsanker ausgebildet ist. Das Einbringen des Ankerpfahles in eine vertikale Bohrung kann zum Bilden eines Mikropfahles im Boden eingesetzt werden. Der Mikropfahl kann vertikal gerichtete Kräfte sowohl nach oben als auch nach unten etwa von einem Bauwerk aufnehmen und in den Boden abtragen. Weiterhin kann mit dem erfindungsgemäßen Ankerpfahl auch ein Zugelement oder Zuganker, etwa für eine Rückverankerung einer Stützwand im Boden oder bei einer Baugrubenumschließung, erzeugt werden. Der erfindungsgemäße Ankerpfahl kann insbesondere auch unter Wasser und besonders bevorzugt bei Offshore-Anwendungen zum Einsatz kommen. Der Ankerpfahl kann auch aus mehr als zwei Ankerstäben gebildet werden, wobei zumindest eine Messmuffe und gegebenenfalls weitere herkömmliche Verbindungsmuffen angeordnet werden.

Der Ankerpfahl kann so in einen Gewässergrund eingebracht und etwa als Auftriebssicherung für Unterwasser-Bauwerke oder Gründungen eingesetzt werden. Zum Bilden des jeweiligen Elementes wird der Ankerpfahl vorzugsweise in eine Bohrung eingesetzt, wobei ein umgebender Freiraum mit einer aushärtbaren Suspension, insbesondere einer Zementsuspension, verfüllt wird.

Das erfindungsgemäße Verfahren zum Messen einer Kraft in einem Ankerpfahl ist dadurch gekennzeichnet, dass ein erfindungsgemäßer Ankerpfahl gebildet wird und zum Messen Messdaten zu Zug- und/oder Druckkräften durch das mindestens eine Kraftmesselement erzeugt werden. Hierzu wird die erfindungsgemäße Messmuffe an dem Ankerpfahl verwendet. Neben den Zug- und/oder Druckkräften können auch Scher- oder Torsionskräfte sowie sonstige Kräfte, die eventuell von Interesse sind, über die Messmuffe erfasst werden.

Eine bevorzugte Verfahrensvariante besteht nach der Erfindung darin, dass das Messen kontinuierlich oder zu diskreten Zeitpunkten erfolgt. Insbesondere kann ein Messen nicht nur beim Erstellen des Ankerpfahles, sondern insbesondere nach einem Einbringen in einen Bodenbereich mit zeitlich großem Abstand zu der Herstellung erfolgen. So kann beispielweise auch eine langfristige Bauwerksüberwachung erreicht werden. Das mindestens eine Kraftmesselement steht dabei mit einer Auswerte-Einheit in Verbindung, welche die erfassten Messsignale in entsprechende Daten zur Kraftbeaufschlagung transformieren kann. Die Auswerteeinheit kann auch ein Warnsignal abgeben, mit welchem etwa dem Überwachungspersonal ein Überschreiten von vorgegebenen Grenzwerten angezeigt werden kann.

Zum Erzielen besonders genauer Messergebnisse ist es nach einer Weiterbildung der Erfindung vorgesehen, dass die Messmuffe bei eingeschraubten Ankerstäben mindestens einmal mit einer definierten Prüfkraft zum Kalibrieren des mindestens einen Messelementes beaufschlagt wird. Zum Kalibrieren können auch mehrmals gleiche oder unterschiedliche Prüfkräfte auf einen gebildeten Ankerpfahl ausgeübt werden. Basierend auf dieser einen oder den mehreren definierten Prüfkräften können dann die sich ergebenden Signale des mindestens einen Kraftmesselementes kalibriert werden. Dies erhöht die spätere Messgenauigkeit.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Halbquerschnittsdarstellung durch eine erfindungsgemäße Messmuffe;
- Fig. 2: eine Vorderansicht der Messmuffe von Fig. 1;
- Fig. 3: eine Seitenansicht eines Gewindeabschnitts eines Ankerstabes; und
- Fig. 4: eine teilweise Seitenansicht zu einem erfindungsgemäßen Ankerpfahl.

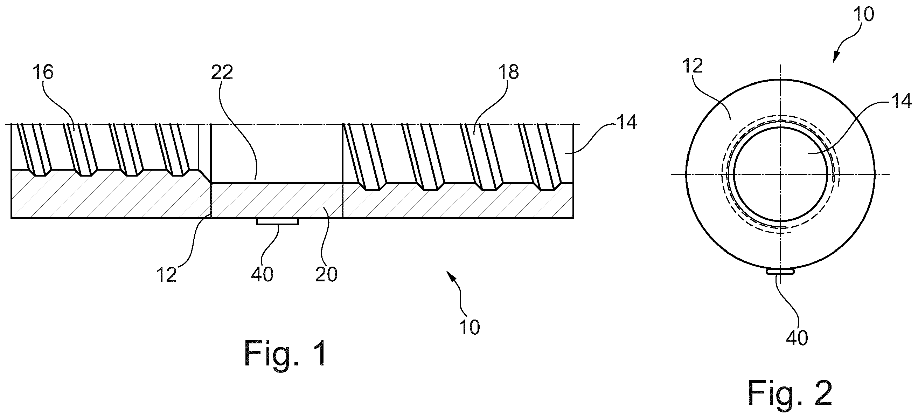

Gemäß der Ausführungsform nach den Figuren 1 und 2 weist eine erfindungsgemäße Messmuffe 10 einen hülsenförmigen Grundkörper 12 mit einem Aufnahmeloch 14 auf, welches durchgehend sein kann. An einer Seite des Grundkörpers 12 ist ein erstes Innengewinde 16 in einem ersten Abschnitt eingebracht, während auf der gegenüberliegenden Seite des Grundkörpers 12 ein zweites Innengewinde 18 in einem zweiten Abschnitt ausgebildet ist. Das erste Innengewinde 16 und das zweite Innengewinde 18 können abhängig von einzuschraubenden Ankerstäben gleich oder unterschiedlich ausgebildet sein.

Zwischen dem ersten Innengewinde 16 und dem zweiten Innengewinde 18 ist in einem Mittenbereich des Grundkörpers 12 ein ringförmiger Mittenabschnitt 20 ausgebildet, welcher beispielsweise durch Eindrehen einer ringförmigen Nut 22 hergestellt sein kann. Durch den Mittenabschnitt 20 sind die beiden Innengewinde 16, 18 voneinander axial beabstandet. Eine Wanddicke in dem ringförmigen Mittenabschnitt 20 kann über den Umfang gleich ausgebildet sein.

An einer vorzugsweise zylindrischen Außenseite der Messmuffe 10 ist im Umfangsbereich des Mittenabschnitts 20, und zwar vorzugsweise in einer axialen Mitte, mindestens ein Kraftmesselement 40 angebracht. Das Kraftmesselement 40 kann insbesondere ein sogenannter Dehnungsmessstreifen sein, welcher auf die Außenseite des Grundkörpers 12 aufgeklebt ist. Durch das Kraftmesselement 40 können Formänderungen an dem Mittenabschnitt 20 als ein Maß für einwirkende Kräfte erfasst und an eine Auswerteeinrichtung weitergeleitet werden.

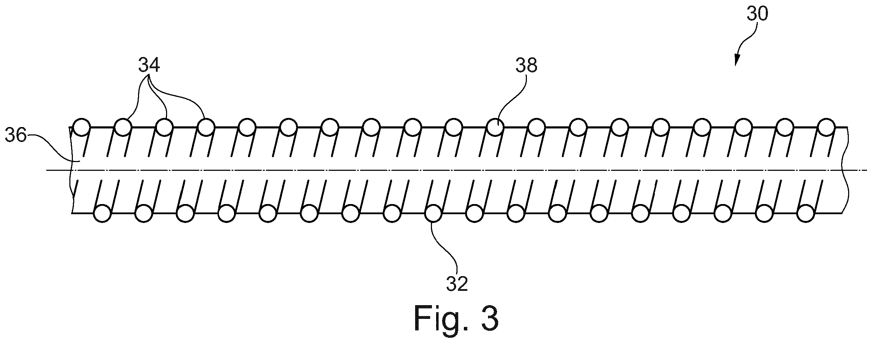

Gemäß Fig. 3 ist ein Gewindeabschnitt 32 eines Ankerstabes 30 dargestellt. Das Außengewinde an dem Ankerstab 30 ist durch voneinander getrennte Gewinderippen 34 gebildet, welche durch sich axial erstreckende Flachbereiche 36 voneinander getrennt sind. Auf diese Weise wird durch die Gewinderippen 34 an dem Ankerstab 30 ein unterbrochenes Gewinde 38 gebildet. Ein derartiges unterbrochenes Gewinde 38 kann gegenüber einem durchgehenden Gewinde effizient hergestellt werden, wobei insgesamt Ankerstäbe 30 mit hoher Zugfestigkeit erreicht werden können. Der Gewindeabschnitt 32 kann sich über die gesamte Länge eines Ankerstabes 30 erstrecken oder nur an den Endbereichen eines Ankerstabes 30 ausgebildet sein.

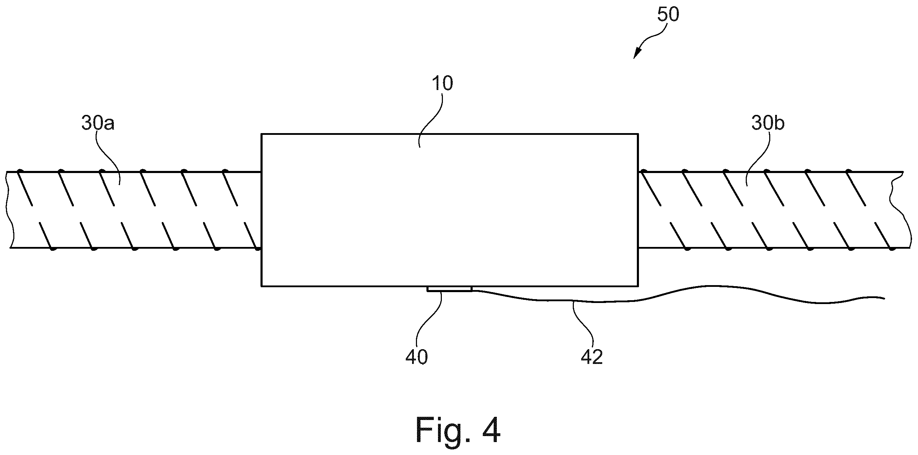

Mit mindestens zwei Ankerstäben 30 und einer erfindungsgemäßen Messmuffe 10 kann ein in Fig. 4 teilweise dargestellter erfindungsgemäßer Ankerpfahl 50 dadurch gebildet werden, dass in das erste Innengewinde 16 ein erster Ankerstab 30a und in das zweite Innengewinde 18 ein zweiter Ankerstab 30b eingeschraubt werden. Die Gewindeverbindungen erstrecken sich dabei nicht in den Mittenbereich 20 der Messmuffe 10, da dieses an seiner Innenseite frei von einem Innengewinde gehalten ist.

Aufgrund der durch die unterbrochenen Gewinderippen 34 bedingten ungleichmäßigen Krafteinleitung von Zug- und/oder Druckkräften von den Ankerstäben 30 in die Messmuffe 10 in den Gewindeabschnitten kann eine zuverlässige Kraftmessung in diesen Bereichen kaum erfolgen, da die Kraftmessung stark von der Drehlage des eingeschraubten Ankerstabes 30 relativ zur Messmuffe 10 abhängig ist. Hingegen ergibt sich in dem frei gehaltenen Mittenabschnitt 20 über den Umfangsquerschnitt eine vergleichmäßigte Kraft- und Spannungsverteilung, so dass durch ein aufgebrachtes Kraftmesselement 40 ein besonders zuverlässiger Messwert zu einer im Ankerpfahl 50 wirkenden Axialkraft erfasst werden kann.

Mittels einer Messleitung 42, welche sich von dem Kraftmesselement 40 entlang einer Längsachse des Ankerpfahls 50 bis zu einer nicht dargestellten Mess- und Auswerteeinrichtung erstreckt, kann eine zuverlässige Datenübertragung und Auswertung der erfassten Messwerte erzielt werden.

## Patentansprüche

1. Messmuffe zum Messen einer Kraft in einem Ankerpfahl, welcher mindestens zwei Ankerstäbe (30) aufweist, wobei die Messmuffe (10) einen hülsenförmigen Grundkörper (12) mit einem Aufnahmeloch (14) umfasst, wobei
- sich von einer Seite ein erstes Innengewinde (16) und von einer zweiten Seite ein zweites Innengewinde (18) in den Grundkörper (12) erstrecken,
- die Innengewinde (16, 18) jeweils zum Einschrauben eines Gewindeabschnitts (32) eines Ankerstabes (30) ausgebildet sind,
- zwischen dem ersten Innengewinde (16) und dem zweiten Innengewinde (18) ein ringförmiger Mittenabschnitt (20) ausgebildet ist, welcher frei von einem Gewinde ist, und
- an dem Mittenabschnitt (20) mindestens ein Kraftmesselement (40) angeordnet ist, welches axial beabstandet von dem Innengewinden (16, 18) ist,
dadurch**gekennzeichnet,**
dass der Mittenabschnitt (20) an seiner Außenseite und seiner Innenseite glattflächig und mit einer gleichen Wandstärke ausgebildet ist.

2. Messmuffe nach Anspruch 1,
dadurch**gekennzeichnet,**
dass die zwei Innengewinde (16, 18) gleich ausgebildet sind.

3. Messmuffe nach Anspruch 1 oder 2,
dadurch**gekennzeichnet,**
dass das mindestens eine Kraftmesselement (40) an dem Mittenabschnitt (20) an einer Außenseite des Grundkörpers (12) angebracht ist.

4. Messmuffe nach einem der Ansprüche 1 bis 3,
dadurch**gekennzeichnet,**
dass in dem Aufnahmeloch (14) der Mittenabschnitt (20) radial nach innen vorspringt und gegenüber dem Innengewinde (16, 18) radial vorsteht oder radial nach außen rückspringt und eine ringförmige Nut (22) bildet.

5. Messmuffe nach einem der Ansprüche 1 bis 4, **dadurch gekennzeichnet, dass** als Kraftmesselement (40) mindestens ein Dehnungsmessstreifen vorgesehen ist.

6. Ankerpfahl mit mindestens zwei Ankerstäben (30), welche an zumindest einem Ende einen Gewindeabschnitt (32) aufweisen,
dadurch**gekennzeichnet,**
dass die Gewindeabschnitte (32) in einer Messmuffe (10) nach einem der Ansprüche 1 bis 5 eingeschraubt sind und
dass die Ankerstäbe (30) durch die Messmuffe (10) miteinander verbunden sind.

7. Ankerpfahl nach Anspruch 6,
dadurch**gekennzeichnet,**
dass eine Messleitung (42) vorgesehen ist, welche sich von dem Kraftmesselement (40) entlang des Ankerpfahles (50) erstreckt.

8. Ankerpfahl nach Anspruch 6 oder 7,
dadurch**gekennzeichnet,**
dass mindestens ein Gewindeabschnitt (32) eines Ankerstabes (30) mit Gewinderippen (34) ausgebildet ist, welche ein unterbrochenes Gewinde (38) bilden.

9. Ankerpfahl nach einem der Ansprüche 6 bis 8,
dadurch**gekennzeichnet,**
dass der Ankerpfahl (50) als ein Mikropfahl, ein Zuganker oder ein Auftriebsanker ausgebildet ist.

10. Verfahren zum Messen einer Kraft in einem Ankerpfahl,
dadurch**gekennzeichnet,**
dass ein Ankerpfahl (50) nach einem der Ansprüche 6 bis 9 gebildet wird und dass zum Messen Messdaten zu Zug- und/oder Druckkräften durch das mindestens eine Kraftmesselement (40) erzeugt werden.

11. Verfahren nach Anspruch 10,
dadurch**gekennzeichnet,**
dass das Messen kontinuierlich oder zu diskreten Zeitpunkten erfolgt.

12. Verfahren nach Anspruch 10 oder 11,
**dadurch gekennzeichnet,**
**dass** die Messmuffe (10) bei eingeschraubten Ankerstäben (30) mindestens einmal mit einer definierten Prüfkraft zum Kalibrieren des mindestens einen Kraftmesselementes (40) beaufschlagt wird.

## Claims

1. Measuring sleeve for measuring a force in an anchor pile which has at least two anchor rods (30), wherein the measuring sleeve (10) comprises a sleeve-shaped base body (12) with a receiving hole (14), wherein
- a first internal thread (16) extends from one side and a second internal thread (18) extends from a second side into the base body (12),
- the internal threads (16, 18) are each designed for screwing in a threaded section (32) of an anchor rod (30),
- between the first internal thread (16) and the second internal thread (18) an annular central section (20) is designed which is free from a thread, and
- on the central section (20) at least one force measuring element (40) is arranged which is axially spaced apart from the internal threads (16, 18),
**characterized in that**
on its external side and its internal side the central section (20) is of smoothsurfaced design and is designed with the same wall thickness.

2. Measuring sleeve according to claim 1,
**characterized in that**
the two internal threads (16, 18) are of the same design.

3. Measuring sleeve according to claim 1 or 2,
**characterized in that**
the at least one force measuring element (40) is mounted on the central section (20) on an external side of the base body (12).

4. Measuring sleeve according to any one of claims 1 to 3,
**characterized in that**
in the receiving hole (14) the central section (20) protrudes radially inwards and projects radially with respect to the internal thread (16, 18) or recedes radially outwards and forms an annular groove (22).

5. Measuring sleeve according to any one of claims 1 to 4,
**characterized in that**
as force measuring element (40) at least one strain gauge is provided.

6. Anchor pile with at least two anchor rods (30) which have a threaded section (32) on at least one end,
**characterized in that**
the threaded sections (32) are screwed into a measuring sleeve (10) according to any one of claims 1 to 5 and
**in that** the anchor rods (30) are connected to each other by the measuring sleeve (10).

7. Anchor pile according to claim 6,
**characterized in that**
a measuring line (42) is provided which extends from the force measuring element (40) along the anchor pile (50).

8. Anchor pile according to claim 6 or 7,
**characterized in that**
at least one threaded section (32) of an anchor rod (30) is designed with threaded ribs (34) which form an interrupted thread (38).

9. Anchor pile according to any one of claims 6 to 8,
**characterized in that**
the anchor pile (50) is designed as a micropile, a tension anchor or an uplift anchor.

10. Method for measuring a force in an anchor pile,
**characterized in that**
an anchor pile (50) according to any one of claims 6 to 9 is formed and
**in that** for measurement measuring data on tensile and/or compressive forces are generated by the at least one force measuring element (40).

11. Method according to claim 10,
**characterized in that**
the measurement takes place continuously or at discrete points in time.

12. Method according to 10 or 11,
**characterized in that**
when the anchor rods (30) are screwed in, a defined test force is applied at least once to the measuring sleeve (10) to calibrate the at least one force measuring element (40).

## Revendications

1. Manchon de mesure pour mesurer une force dans un pieu d'ancrage, qui présente au moins deux tiges d'ancrage (30), le manchon de mesure (10) comprenant un corps de base (12) en forme de douille avec un trou de réception (14),
- un premier filetage intérieur (16) s'étendant d'un côté et un deuxième filetage intérieur (18) s'étendant d'un deuxième côté dans le corps de base (12),
- les filetages intérieurs (16, 18) étant respectivement réalisés pour visser une section filetée (32) d'une tige d'ancrage (30),
- une section centrale annulaire (20) qui est exempte de filetage étant réalisée entre le premier filetage intérieur (16) et le deuxième filetage intérieur (18), et
- au moins un élément de mesure de force (40) étant agencé sur la section centrale (20), lequel est espacé axialement des filetages intérieurs (16, 18),
**caractérisé en ce que**
la section centrale (20) est réalisée sur son côté extérieur et son coté intérieur avec une surface lisse et une épaisseur de paroi identique.

2. Manchon de mesure selon la revendication 1,
**caractérisé en ce que**
les deux filetages intérieurs (16, 18) sont réalisés sous forme identique.

3. Manchon de mesure selon la revendication 1 ou 2,
**caractérisé en ce que**
l'au moins un élément de mesure de force (40) est disposé sur la section centrale (20) sur un côté extérieur du corps de base (12).

4. Manchon de mesure selon l'une quelconque des revendications 1 à 3, **caractérisé en ce que**,
dans le trou de réception (14), la section centrale (20) fait saillie radialement vers l'intérieur et dépasse radialement par rapport au filetage intérieur (16, 18) ou fait saillie en retrait radialement vers l'extérieur et forme une rainure annulaire (22).

5. Manchon de mesure selon l'une quelconque des revendications 1 à 4, **caractérisé en ce qu'**
au moins une jauge de contrainte est prévue en tant qu'élément de mesure de force (40).

6. Pieu d'ancrage avec au moins deux tiges d'ancrage (30), qui présentent à au moins une extrémité une section filetée (32),
**caractérisé en ce que**
les sections filetées (32) sont vissées dans un manchon de mesure (10) selon l'une quelconque des revendications 1 à 5 et
**en ce que** les tiges d'ancrage (30) sont reliées entre elles par le manchon de mesure (10).

7. Pieu d'ancrage selon la revendication 6,
**caractérisé en ce qu'**
il est prévu une ligne de mesure (42) qui s'étend depuis l'élément de mesure de force (40) le long du pieu d'ancrage (50).

8. Pieu d'ancrage selon la revendication 6 ou 7,
**caractérisé en ce qu'**
au moins une section filetée (32) d'une tige d'ancrage (30) est réalisée avec des nervures de filetage (34) qui forment un filetage interrompu (38).

9. Pieu d'ancrage selon l'une quelconque des revendications 6 à 8,
**caractérisé en ce que**
le pieu d'ancrage (50) est réalisé sous la forme d'un micropieu, d'un tirant d'ancrage ou d'un ancrage anti-flottement.

10. Procédé de mesure d'une force dans un pieu d'ancrage,
**caractérisé en ce qu'**
un pieu d'ancrage (50) selon l'une quelconque des revendications 6 à 9 est formé et **en ce que**, pour la mesure, des données de mesure concernant des forces de traction et/ou de compression sont générées par l'au moins un élément de mesure de force (40).

11. Procédé selon la revendication 10,
**caractérisé en ce que**
la mesure est effectuée en continu ou à des instants discrets.

12. Procédé selon la revendication 10 ou 11,
**caractérisé en ce que**,
lorsque les tiges d'ancrage (30) sont vissées, le manchon de mesure (10) est soumis au moins une fois à une force d'essai définie pour calibrer l'au moins un élément de mesure de force (40).
